# EUROPEAN PATENT APPLICATION

(11) **EP 2 629 212 A1**
(43) Date of publication of application: **21.08.2013**
(21) Application number: 12290053.3
(22) Date of filing: 14.02.2012
(51) Int. Cl.: G06F 17/30

(54) **Method for storing and searching tagged content items in a distributed system**

(71) Applicant: Alcatel Lucent, 75007 Paris (FR)
(72) Inventor: Theeten, Bart, 9100 Sint-Niklaas (BE); Pianese, Fabio, 1000 Brussels (BE)
(74) Representative: IP Hills NV

(57) **Abstract**

A method for storing tagged content items in a distributed data exchange system, comprising:
A1. generating a Bloom 1 filter for each tag associated with a content item;
A2. generating a key consisting of the juxtaposition of a membership word of the Bloom 1 filter and a membership word index inside the Bloom 1 filter;
A3. generating a value comprising a compact representation of all tags, and a reference to the content item; and
A4. adding the key-value pair to a distributed hash table.
and for searching tagged content items, comprising:
B1. receiving a multiple keyword search query;
B2. choosing a keyword;
B3. retrieving from the distributed hash table a first list of content items having the keyword as associated tag; and
B4. filtering the first list via the compact representation of all tags to obtain a second list of content items that comprise all keywords as associated tags.

## Description

### Field of the Invention

The present invention generally relates to storing and searching tagged content items in a large scale distributed data exchange system, e.g. a cloud computing system, a social network, etc. In such a system, a large number of networked computing devices cooperate in order to provide an infrastructure for storing and searching user-tagged or machine-tagged content items such as data files, pictures, movies, services and/or other resources. The tags associated with a content item represent metadata that may be user generated or may be generated automatically, e.g. through face recognition software when pictures are uploaded in the system, or the like. Typically, millions of users are simultaneously searching content items in the distributed environment through multi-keyword queries. The present invention therefore generally aims at providing an efficient, scalable computer-implemented method and application for storing content items in a distributed data exchange system, and for executing multi-keyword searches for content items stored in such system.

### Background of the Invention

Various state of the art mechanisms exist for multi-keyword searching in large scale distributed data systems. In general, these existing mechanisms are either unreliable using a single point of failure, or inefficient through excessive node accesses and usage of processing resources as will be explained below.

Relational databases are the most common way to make content searchable. Although such relational databases use various techniques to avoid becoming a single point of failure like for instance replication and backup, they basically rely on costly, centralized infrastructure. Relational database infrastructure is typically subject to issues in dimensioning, i.e. either over-provisioning or under-provisioning the hardware resources in view of actual or anticipated system load, and issues in reliability, maintainability, and upgradability, e.g. affecting the service as a result of the centralized nature of such a relational database.

As an alternative to relational databases, peer-to-peer systems that no longer rely on central entities, have been deployed. Performing multi-keyword searches in such peer-to-peer systems however remains a complex and costly operation, typically involving external search engines to index and provide access to the content items. The following paragraphs describe the most common multi-keyword search mechanisms used today in such peer-to-peer systems.

Unstructured searching relies on broadcasting the multi-keyword search query to all nodes in the distributed system. Each node receiving the search query returns a set of content items that are stored in that node and have the required keywords as associated tags.

Unstructured searching floods the nodes or servers in the distributed system with search queries. In a large scale distributed system, each node will have to handle millions of search queries, even if the search query is not relevant to the server, leading to overload, slow response times and inefficient usage of processing resources.

In a Distributed Hash Table or DHT, a pointer to a content item, i.e. metadata like an URL, tag, size, date, author, etc. different from the content itself, is stored at addresses that correspond to each tag associated with the content item. Each tag associated with a content item is hashed in order to obtain the corresponding addresses in the DHT where a pointer to the content item will be stored. The address and pointer to the content item represent key-value pairs. Performing a multi-keyword search in a DHT based system involves hashing the keywords that form part of the search query, accessing the DHT at the addresses corresponding to the hashed keywords, using the pointers stored at those addresses to retrieve metadata about the content that contain at least one required keyword, and filtering the content items that do not contain all of the required keywords in a merge operation.

DHTs are disadvantageous in that each keyword of the multi-keyword query needs to be hashed and metadata (i.e. tags for that content, pointers to the content, etc.) has to be retrieved from the nodes in the distributed system for each of the keywords, leading to inefficient network usage, duplicate results, non-relevant pointers, etc. In addition, a rather complex and computation-intensive merge operation has to be performed.

A Bloom filter is an array of bits that can be used to test if multiple or all keywords of a multi-keyword search query are present amongst tags associated with content items. Each tag associated with a content item is mapped to certain positions in the bit array through several hash functions. These positions in the bit array are set "1" whereas the other bits in the array remain "0". In order to perform a multi-keyword search, each keyword in the search query is hashed in order to generate a search query Bloom filter. This Bloom filter is compared to the Bloom filters generated for all content items in order to select the content items that at least have the bits set "1" in the search query Bloom filter.

Searches based on Bloom filters generate no false negatives but false positives search results are possible as a result of the overlap in bit array positions generated by the hash functions on the different tags/keywords. The number of false positives increases with the amount of tags associated with content items, and with the amount of keywords in the multi-keyword search query. As a consequence, an additional mechanism, e.g. exact string matching of tags, might be adopted in order to remove the false positives in an additional step.

Several combinations of the above described mechanisms have been proposed in literature. For multi-keyword searches in large scale distributed data exchange systems, the article "Supporting Multiple-Keyword Search in a Hybrid Structured Peer-to-Peer Network" from the authors Xing Jin, W.-P. Ken Yiu and S.-H. Gary Chan, published in the IEEE ICC 2006 Proceedings, describes the MKey scheme based on Bloom filters. This MKey scheme offers benefits in the data pointers stored and addresses searched when large amounts of tags are associated with the content items, e.g. more than 30 tags per content item. For most data sharing applications, association of such large amounts of tags is unusual.

It is an objective of the present invention to disclose a computer-implemented method and application for storing tagged content items in a distributed data exchange system and for performing multi-keyword searches in such system that resolves the above mentioned disadvantages of existing mechanisms. More particularly, it is an objective to disclose a method and application for storing/retrieving tagged content items that remains scalable, reaches production sizes of millions of simultaneous multi-keyword searches in an efficient manner, i.e. with a compact representation of content-tag associations, with reduced access to the distributed memories, and with reduced false positive occurrences.

### Summary of the Invention

According to the present invention, the above defined objectives are realized through the method for storing and searching tagged content items in a distributed data exchange system as defined by claim 1,
the method comprising for storage of a tagged content item and for each tag associated with the content item the steps of:
A1. generating a Bloom 1 filter for the tag;
A2. generating a key consisting of a juxtaposition of a membership word of the Bloom 1 filter and a membership word index inside the Bloom 1 filter, the membership word representing a non-empty part of the Bloom 1 filter;
A3. generating a value comprising a compact representation of all tags associated with the content item, and a reference to a storage location of the content item; and
A4. adding a key-value pair to a distributed hash table, the key-value pair consisting of the key and the value,
   the method further comprising for searching tagged content items the steps of:

B1. receiving a search query comprising multiple keywords;
B2. choosing a keyword out of the multiple keywords;
B3. retrieving from the distributed hash table a first list of references to content items having the keyword as associated tag; and
B4. filtering the first list via the compact representation of all tags to obtain a second list of references to content items that comprise all keywords of the search query as associated tags.

In order to remain scalable for thousands of simultaneous users and millions of tagged content items, a Distributed Hash Table is used as a structured overlay for the distributed system. The non-empty part of a Bloom 1 filter computed on each tag associated with a content item, i.e. the membership word of a Bloom 1 filter, together with the membership word index inside the Bloom 1 filter, is used as key in the Distributed Hash Table for storing a pointer to the data object. Hence, the current invention combines the best of both worlds, i.e. scalability of Distributed Hash Tables and the compact representation of tag-content item associations offered by Bloom filters. The number of copies of stored content item pointers, i.e. references to storage locations, grows linearly with the amount of tags associated with content items. The length of an object pointer is also linearly proportional to the number of associated tags. Multi-keyword searches in a distributed environment are executed through lookup of a single key, hence requiring only a single access operation. The number of content item records to be processed can further be reduced through optional optimization techniques, as will be explained below. The usage of Bloom 1 filters, i.e. large Bloom filters that can be represented compactly in memory by their membership word and membership word index, significantly reduces the occurrence of false positives.

Preferably, as defined by claim 2, the keyword chosen is the least popular keyword out of the multiple keywords, i.e. the keyword that has the least number of occurrences across all content items.

Indeed, by choosing the most unpopular or least frequently used keyword, the first list of pointers is minimized and, at the same time, the number of nodes in the distributed system that must be consulted is also minimized (just one). In order to be able to choose the least popular keyword, a table or database tracking appropriate tag popularity can be maintained and queried upon each multi-keyword search. Alternatively, heuristics based on word entropy or length can be used.

Optionally, as defined by claim 3,
the value further comprises the amount of non-empty filter words in the Bloom 1 filter; and
retrieving the first list of references comprises:
- computing a Bloom 1 filter over all of the multiple keywords; and
- retrieving from the distributed hash table only references to items that contain an amount of words equal to or larger than the number of non-empty words in the Bloom 1 filter.

Indeed, a second optimization may consists in computing a Bloom 1 filter over all keywords in the search query and restricting the search to content items that contain an amount of words equal to or larger than the amount of non-empty words in the Bloom 1 filter.

According to a further optional aspect, defined by claim 4,
the value further comprises information indicative for ownership and/or access control of the content item.

Thus, optionally, the value or information stored in the Distributed Hash Table may contain ownership and access control information enabling to control if the pointer to a content item is allowed to be returned in response to a particular search query, depending on e.g. who executes the search query or from where the search query is being executed.

In addition to the method defined by claim 1, the current invention relates to a corresponding computer-implemented application for storing and searching tagged content items in a distributed data exchange system as defined by claim 5,
the application comprising for storage of a tagged content item:
A1. means for generating a Bloom 1 filter for each tag associated with the content item;
A2. means for generating a key consisting of a juxtaposition of a membership word of the Bloom 1 filter and a membership word index inside the Bloom 1 filter, the membership word representing a non-empty part of the Bloom 1 filter;
A3. means for generating a value comprising a compact representation of all tags associated with the content item, and a reference to a storage location of the content item; and
A4. means for adding a key-value pair to a distributed hash table, the key-value pair consisting of the key and the value,
   the application further comprising for searching tagged content items:
B1. an interface for receiving a search query comprising multiple keywords;
B2. means for choosing a keyword out of the multiple keywords;
B3. means for retrieving from the distributed hash table a first list of references to content items having the keyword as associated tag; and
B4. means filtering the first list via the compact representation of all tags to obtain a second list of references to content items that comprise all keywords of the search query as associated tags.

### Brief Description of the Drawings

Fig. 1 illustrates a first embodiment of the method for storing and searching tagged content items according to the present invention;

Fig. 2 illustrates the improved performance of the present invention in terms of reduced false positive rate; and

Fig. 3 illustrates the improved efficiency of the present invention in terms of the average amount of returned object records to be processed.

### Detailed Description of Embodiment(s)

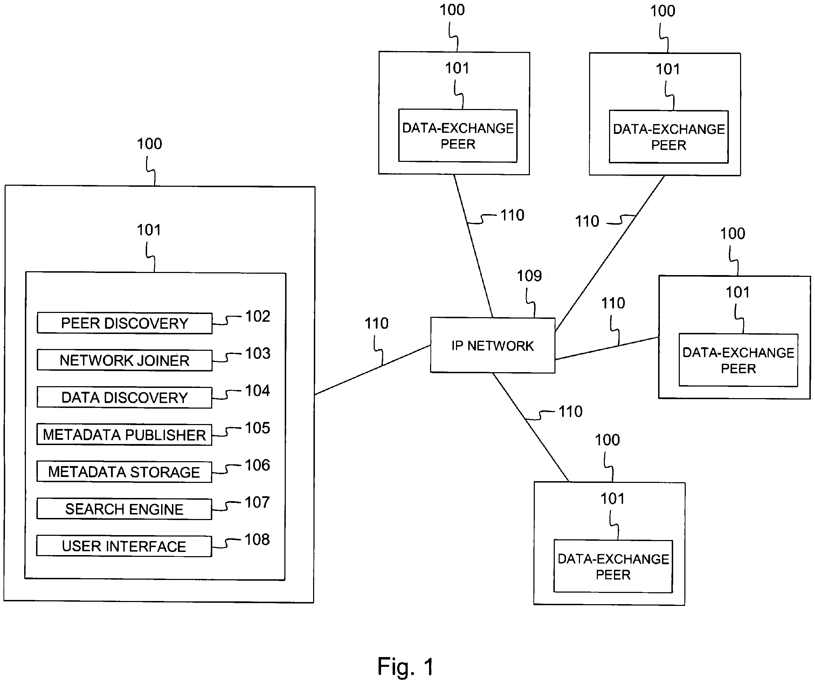

In a first embodiment, illustrated by Fig. 1, the multi-keyword search functionality is provided by a distributed system and acts as the basis for data exchanges between users of a social networking and file sharing application. Users or user-activated software components can submit multi-keyword queries to the system, and receive a list of matching data items as a response, with an appropriate interface or presentation that allows to access, download, or otherwise operate on one or more of the retrieved data items.

In Fig. 1, this first embodiment is represented by a peer-to-peer implementation. The data-exchange network drawn in Fig. 1 takes the form of a large number of end-user PCs 100 with connectivity 110 to a network 109 (such as an IP network) and that each run a software application 101 that includes a subset of the following:
- a PEER DISCOVERY module 102 to discover peers, i.e. other instances of the software application 101 running on other user's PCs, in order to detect which other nodes are present on the network;
- a NETWORK JOINER module 103 to join the data-exchange network as a peer, in order to enable participation and to publish presence on the network;
- a DATA DISCOVERY module 104 to discover data in the end-user's home network, including but not limited to the PC where the software application is running on; in other words, this is an optional crawler that makes own content or data available to others;
- a METADATA PUBLISHER module 105 to publish metadata related to the discovered own content items in the data-exchange network, including but not limited to the item's name, keywords/tags describing the item, a pointer to the discovered item or service providing access to this item, access restrictions, and a Bloom 1 filter summarizing the set of keywords associated with the item;
- a METADATA STORAGE module 106 to store metadata about a subset of items available in the data-exchange network;
- a SEARCH ENGINE 107 for searching content items in the data-exchange network based on a multi-keyword search query and based on the method according to the invention described below;
- a USER INTERFACE 108 that enables the user to enter the keywords/tags of a multi-keyword search query to search for data items in the data-exchange network

For each data object or item to be stored, an object record is saved in a Distributed Hash Table (DHT) at each of the keys that correspond to the associated tags. Such object record contains:
- a compact representation of the item's tags, which consists in the non-empty sections of the full Bloom 1 filter computed on the complete tag set, represented as a set of tuples of the form <index; word>;
- the number of non-empty Bloom 1 filter words in the full Bloom 1 filter;
- the item's URL or Uniform Resource Identifier;
- eventual object ownership and access control information; and
- eventual additional metadata.

A user interested in finding one or more items related to some topic, enters one or more keywords in the interface 108. Although it is assumed in the example that a user generates a query, it is noticed that queries may be generated by other sources, e.g. a computer program, a sensed date, etc. A Bloom 1 filter is calculated based on those keywords and is used to find a node in the data-exchange network that knows which data items match all entered keywords. A - possibly partial - list of matching items is presented to the user.

Searching these items involves the following operations:
- choosing a single tag among those in the issued query and retrieving the list of object pointers associated with it by consulting the Distributed Hash Table; and
- filtering the retrieved pointers to obtain pointers to those objects that contain at least all of the tags in the query; the filtering is done via the compact representation of the item's tags stored in the DHT.

The first operation in the above search method can be optimized by appropriately selecting the single tag/keyword to look for amongst all keywords that form part of the issued query. Suitable tags are the most infrequent words contained by the query. To choose a good key, a table tracking global tag popularity, even approximate, can be maintained to be queried upon a search. Alternatively, simple heuristics based on word information entropy and/or length can be used.

The second operation in the above search method can be optimized by computing the Bloom 1 filter over all of the query tags, and restricting the search to the object pointers that contain a number of words which is either equal to or larger than the number of non-empty query words of the Bloom 1 filter.

It is noticed that the first embodiment can be also implemented in alternative ways. In particular, some implementation may involve the presence of a service provider who runs part of the software application and possibly owns or controls the hardware on which the software is deployed. Regardless of the deployment method, any skilled person will appreciate that such implementation represents only a different form of the same first embodiment as it uses the same functionality as described above for the same purposes, but with a different repartition of the modules 102 to 108 (or a subset thereof) of the software application over the networked hardware that constitutes the distributed computing system.

In a second embodiment, machines in a cloud computing infrastructure publish information about their resources, such as the number of cores, the current CPU load, the available bandwidth, the number of services running on it, the physical location, the available memory, etc. The published information is indexed in a distributed multiple-keyword search engine. A network provisioning tool can interrogate the distributed search engine to discover those machines in the cloud computing infrastructure that exactly match a desired number of requirements on load, bandwidth, memory, location, etc.

This second embodiment can also be implemented in the form of either a fully decentralized peer-to-peer system, with the individual machines in the cloud computing infrastructure each running a software application with functionalities substantially similar to the software application 101 in the first embodiment. The second embodiment alternatively can be implemented as a distributed system where only a subset of the available hardware is devoted to supporting the search engine features according to this invention, with the other nodes acting as simple clients that publish up-to-date information into the system.

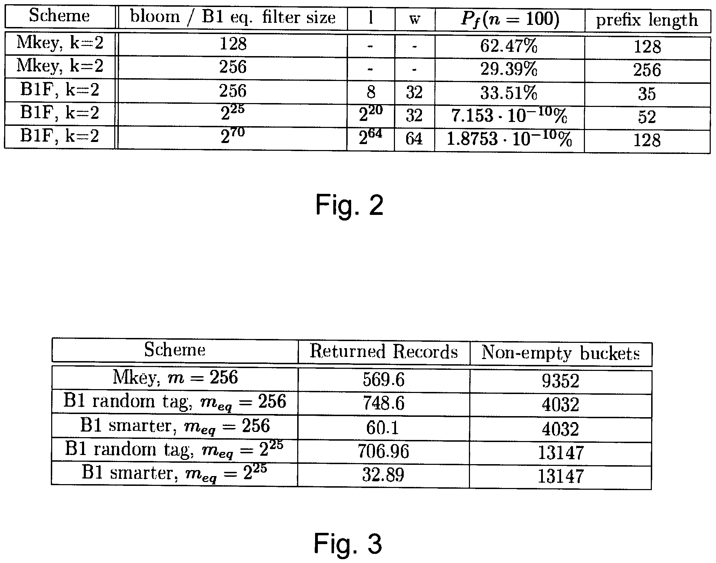

Fig. 2 shows a table wherein the false positive rates of the method according to the invention are compared with an Mkey based scheme as known from the prior art. For equal key space size, i.e. a prefix length of 128 bytes, the false positive rate Pf for n=100 tags drops from 62,47 % for the Mkey based implementation to 1.8753 10⁻¹⁰ % for the method according to the invention based on Bloom 1 filters or B1 F.

Fig. 3 shows a table listing the average number of object pointers returned per 10.000 random successful multi-keyword searches using the method according to the present invention based on Bloom 1 or B1 filters versus an Mkey based implementation. The "smarter" version implements the optimization of tag choice based on tag popularity, as explained here above. Such optimization is not available in the Mkey based implementation due to loss of tag popularity information (tags are encoded in the Bloom filter). The table shows for instance that the number of object records to be retrieved and processed on average drops from 570 records for the Mkey based implementation to 33 for the smarter implementation according to the invention based on Bloom 1 or B1 filters.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method for storing and searching tagged content items in a distributed data exchange system,
said method comprising for storage of a tagged content item and for each tag associated with said content item the steps of:
A1. generating a Bloom 1 filter for said tag associated with said content item;
A2. generating a key consisting of a juxtaposition of a membership word of said Bloom 1 filter and a membership word index inside said Bloom 1 filter, said membership word representing a non-empty part of said Bloom 1 filter;
A3. generating a value comprising a compact representation of all tags associated with said content item, and a reference to a storage location of said content item; and
A4. adding a key-value pair to a distributed hash table, said key-value pair consisting of said key and said value,
said method further comprising for searching tagged content items the steps of:
B1. receiving a search query comprising multiple keywords;
B2. choosing a keyword out of said multiple keywords;
B3. retrieving from said distributed hash table a first list of references to content items having said keyword as associated tag; and
B4. filtering said first list via said compact representation of all tags to obtain a second list of references to content items that comprise all keywords of said search query as associated tags.

2. A method according to claim 1,
wherein said keyword chosen is a least popular keyword out of said multiple keywords.

3. A method according to claim 1,
wherein said value further comprises an amount of non-empty filter words in said Bloom 1 filter; and
wherein retrieving said first list of references comprises:
- computing a Bloom 1 filter over all of said multiple keywords; and
- retrieving from said distributed hash table only references to items that contain an amount of words equal to or larger than said number of non-empty words in said Bloom 1 filter.

4. A method according to claim 1,
wherein said value further comprises information indicative for ownership and/or access control of said content item.

5. A computer-implemented application for storing and searching tagged content items in a distributed data exchange system,
said application comprising for storage of a tagged content item:
A1. means for generating a Bloom 1 filter for each tag associated with said content item;
A2. means for generating a key consisting of a juxtaposition of a membership word of said Bloom 1 filter and a membership word index inside said Bloom 1 filter, said membership word representing a non-empty part of said Bloom 1 filter;
A3. means for generating a value comprising a compact representation of all tags associated with said content item, and a reference to a storage location of said content item; and
A4. means for adding a key-value pair to a distributed hash table, said key-value pair consisting of said key and said value,
said application further comprising for searching tagged content items:
B1. an interface for receiving a search query comprising multiple keywords;
B2. means for choosing a keyword out of said multiple keywords;
B3. means for retrieving from said distributed hash table a first list of references to content items having said keyword as associated tag; and
B4. means filtering said first list via said compact representation of all tags to obtain a second list of references to content items that comprise all keywords of said search query as associated tags.
